# EUROPÄISCHE PATENTSCHRIFT

(11) **EP 1 325 826 B1**
(45) Veröffentlichungstag und Bekanntmachung des Hinweises auf die Patenterteilung: **06.05.2004**
(21) Anmeldenummer: 02017171.6
(22) Anmeldetag: 31.07.2002
(51) Int. Cl.: B60J 7/12, B60J 1/18

(54) **Verdeck für ein Cabriolet-Fahrzeug**
Roof for a convertible vehicle
Toit pour un cabriolet

(30) Priorität: 05.01.2002 DE 10200221
(43) Veröffentlichungstag der Anmeldung: 09.07.2003
(73) Patentinhaber: Edscha Cabrio-Dachsysteme GmbH, 94491 Hengersberg (DE)
(72) Erfinder: Mandl, Thomas, 94469 Deggendorf (DE); Freimuth, Werner, 94249 Bodenmais (DE); Pecho, Walter, 94160 Ringelai (DE); Obendiek, Klaus, 94032 Passau (DE)
(74) Vertreter: Sparing, Rolf Klaus

(56) Entgegenhaltungen:
- DE-A- 4 320 603
- DE-A- 10 113 427
- DE-A- 19 912 358
- DE-U- 29 713 555
- DE-U- 29 922 812

## Beschreibung

Die vorliegende Erfindung betrifft ein Verdeck für ein Cabriolet-Fahrzeug nach dem in DE 29 713 555 U1 offenbarten Oberbegriff des Anspruchs 1.

Der moderne Bau von Cabriolet-Fahrzeugen verlangt zunehmend nach individuellen Formgebungen der Verdecke, ohne daß damit Nachteile hinsichtlich der Lebensdauer, der Formstabilität oder des beanspruchten Stauraumvolumens bei geöffnetem Verdeck verbunden sein dürfen. Insbesondere Cabriolet-Verdecke mit finnenartigen heckseitigen Endbereichen, die ein besonders sportliches Aussehen im geschlossenen Verdeckzustand verleihen, sind gewünscht, führen jedoch zu Nachteilen bei der Realisierung insbesondere genau der finnenartigen Endbereiche.

Zudem ist es zunehmend gewünscht, daß die Heckscheibe des Fahrzeugs als starre, aus Glas oder Kunststoff bestehende Scheibe ausgebildet ist. Bei vielen und insbesondere den zuvor erwähnten Verdeckanordnungen sind dabei solche starren Heckscheiben nicht auf einfache Weise in den Verdeckbezug integrierbar, da bei einer Verdecköffnungs- oder Schließbewegung ein Beschädigen der Scheibe befürchtet werden muß.

DE 43 20 603 C2 beschreibt ein Kraftfahrzeug mit einem verschwenkbaren Hartschalen-Klappverdeck, bei dem eine Heckscheibe separat zu dem Hartschalen-Klappverdeck verfahrbar ist. Dabei kann die Heckscheibe in einem geschlossenen Verdeckzustand in einer Aufnahme am hinteren Hartschalenverdeckteil eingefahren werden. Eine ausreichend genaue Ausrichtung der Heckscheibe zu einer zu ihr komplementären Aufnahme im heckseitigen Dachteil. ist dabei prinzipbedingt durch die Tatsache gewährleistet, daß es sich um ein Hartschalen-Klappverdeck handelt. Eine derart einfache Lösung ist bei der Integration einer Heckscheibe in ein flexibles Faltverdeck nicht möglich.

DE 199 12 355 C1 beschreibt ein Cabriolet-Fahrzeug mit absenkbarer Heckscheibe, bei dem das Verdeck des Cabriolet-Fahrzeugs als flexibles Faltverdeck ausgebildet ist und die Heckscheibe in einem mit dem Faltverdeck verbundenen Heckscheibenrahmen aufgenommen ist. Die Heckscheibe ist dabei einschließlich ihres Antriebs mit dem Heckscheibenrahmen verbunden und wird dementsprechend bei einem Öffnen oder Schließen des Faltverdecks mitverschwenkt und auch zusammen mit dem Faltverdeck im Heckbereich des Fahrzeugs abgelegt. Es ist daher nicht möglich, die Heckscheibe in einem geöffneten Verdeckzustand hochzufahren, um so etwa die Funktion eines Windschutzes zu übernehmen. Zudem sind bei dem gezeigten Verdeck heckseitig und seitlich angeordnete, finnenförmige Endbereiche vorgesehen, die aus Verdeckstoff gebildet werden. Dabei wird in der praktischen Realisierung die heckwärts schräg nach unten verlaufende Oberkante der finnenförmigen Endbereiche nicht durch Gestängeteile ausgebildet oder unterstützt, sondern lediglich durch freien, gespannten Stoff ausgebildet oder gegebenenfalls durch ein unter dem Stoff gespanntes Seil unterstützt, wobei die Spannung durch jeweils die Basis der Endbereiche bildende Spannbügelelemente in den Verdeckstoff eingebracht wird. Hierdurch sind jedoch gerade diese finnenartigen Endbereiche auf unzureichende Weise konstruiert, denn insbesondere bei längerer Betriebsdauer des Verdecks längt sich der Verdeckstoff bzw. das die Schräge unterstützende Seil derart, daß die Kontur der finnenförmigen Endbereiche einbricht. Zudem ist durch den nicht ausreichend abgestützten Stoff sogar einem Vibrieren der Endbereiche im Fahrtwind Vorschub geleistet, was zu einem Verschleiß des Verdeckstoffs führen kann. Die mangelnde Unterstützung und Führung des Verdeckbezugs in dem fraglichen Bereich führt zudem zu einem undefinierten Verfalten des Verdeckbezugs bei einem Öffnungsvorgang.

DE 297 13 555 U1 beschreibt ein Verdeck für ein Cabriolet-Fahrzeug, bei dem der heckseitige Verdeckstoffspannbügel finnenförmige, den Verdeckstoff formende Erstreckungen aufweist, wobei eine obere Kante des finnenförmigen Bereichs des Verdeckstoffs mittels eines Spannseils oder einer teleskopierbaren Stange unterstützbar ist.

DE 199 12 358 A1 beschreibt ein Verdeck für ein Cabriolet-Fahrzeug, bei dem der heckseitige Verdeckstoffspannbügel finnenförmige, den Verdeckstoff formende Erstreckungen aufweist, wobei ein Lenker, der in Fahrtrichtung etwa mittig an der finnenförmigen Erstreckung des Spannbügels angelenkt ist, im geschlossenen Verdeckzustand einen Winkel von etwa 45° mit dem Spannbügel bildet und im geöffneten Verdeckzustand in etwa parallel auf den Spannbügel verschwenkt ist.

DE 299 22 812 U1 beschreibt ein Verdeck für ein Cabriolet-Fahrzeug, bei dem der heckseitige Verdeckstoffspannbügel finnenförmige, den Verdeckstoff formende Erstreckungen aufweist. Mittel zur Unterstützung oder Ausformung von oberen Kanten des Verdeckstoffes im Bereich der finnenförmigen Erstreckungen sind nicht vorgesehen.

DE 101 13 427 A1 beschreibt ein Verdeck für ein Cabriolet-Fahrzeug, bei dem eine Heckscheibe vom übrigen Verdeck lösbar ausgebildet ist und im geöffneten Verdeckzustand als ein Windschott des Fahrzeugs nutzbar ist.

Es ist die Aufgabe der vorliegenden Erfindung, ein Verdeck für ein Cabriolet-Fahrzeug zu schaffen, bei dem die Ausbildung von heckseitigen Finnen des Verdecks auf vorteilhafte Weise ermöglicht ist.

Diese Aufgabe wird für ein eingangs genanntes Verdeck für ein Cabriolet-Fahrzeug erfindungsgemäß mit den kennzeichnenden Merkmalen des Anspruchs 1 gelöst.

Dadurch wird vorteilhaft erreicht, daß eine schräg abfallende Oberkante der heckseitigen Finnen besonders genau und dauerhaft formstabil ausformbar ist, wobei bei einem Öffnungsvorgang des Verdecks eine raumsparende Verschwenkung des Finnenlenkers durch die Anlenkung des Finnenlenkers an dem Verdeckstoffspannbügel erreichbar ist. Die seitlichen, aus Verdeckstoff aufgespannten Flächen der Finnen können durch den formsteifen Finnenlenker besonders straff aufgespannt werden.

In einer bevorzugten Ausführungsform eines erfindungsgemäßen Verdecks ist der Finnenlenker in einem geöffneten Verdeckzustand im wesentlichen parallel zu dem Verdeckstoffspannbügel angeordnet, wodurch die heckseitigen Finnen besonders raumsparend in eine flache Struktur aus Lenkern und Verdeckstoff überführt werden.

Bevorzugt ist eine Spannstange und ein Gegenstück vorgesehen, welche in dem geschlossenen Verdeckzustand in einer Übertotpunktlage zueinander befindlich sind und den Verdeckstoffspannbügel abstützen. Hierdurch wird eine gute und dauerhafte Spannung des geschlossenen Verdecks gewährleistet.

Bevorzugt ist zudem ein Spriegellenker vorgesehen, wobei der Spriegellenker, der Finnenlenker und der Verdeckstoffspannbügel im geschlossenen Verdeckzustand ein Dreieck aufspannen und wobei ein oberes Segment eines Heckscheibenrahmens mit dem Spriegellenker starr verbunden ist, wobei ein hinterer Abschlußbereich des Verdeckbezugs an dem oberen Segment festlegbar ist. Durch die somit ermöglichte exakte Positionierung des oberen Segments ist das Vorsehen einer separat zu dem Verdeck bewegbaren starren Heckscheibe auf besonders einfache Weise ermöglicht.

Besonders vorteilhaft ist zudem ein seitliches Element vorgesehen, wobei das seitliche Element einen im geschlossenen Verdeckzustand im wesentlichen senkrecht ausgerichteten seitlichen Rahmenbereich einer Heckscheibe ausbildet. Unter anderem durch das seitliche Element wird erreicht, daß die starre Heckscheibe im geschlossenen Verdeckzustand mittels eines das seitliche Element umfassenden Heckscheibenrahmens gegen den flexiblen Verdeckbezug abdichtbar ist, zugleich aber durch ein Verschwenken des Heckscheibenrahmens die Heckscheibe auch im geöffneten Verdeckzustand hochfahrbar ist, wodurch sie beispielsweise die Funktion eines Windschutzes übemehmen kann.

Vorteilhaft greift die Heckscheibe dabei im geschlossenen Verdeckzustand in ihrem hochgefahren Zustand in eine nutartige Ausnehmung des Heckscheibenrahmens ein, wodurch mittels Dichtelementen auf einfache Weise eine Abdichtung der Heckscheibe gegen das Verdeck ermöglicht ist.

In einer bevorzugten Ausführungsform eines erfindungsgemäßen Verdecks weist das Verdeckgestänge in einem heckseitigen Endbereich zwei jeweils seitlich angeordnete Verdeckstoffspannbügel auf, wobei der Heckscheibenrahmen zwischen den Verdeckstoffspannbügeln angeordnet ist. Hierdurch wird eine besonders ansprechende Möglichkeit der Formgebung eines erfindungsgemäßen Verdecks geschaffen, wobei die beiden seitlichen Verdeckstoffspannbügel den Verdeckstoff nach Art zweier seitlich der Heckscheibe angeordneter und zum Heck des Fahrzeugs gerichteter Finnen ausformen.

Vorteilhaft umfaßt der Heckscheibenrahmen des erfindungsgemäßen Verdecks mehrere zueinander bewegbare Segmente, wobei zwei der Segmente jeweils seitlich angeordnet sind und im geschlossenen Verdeckzustand Seitenränder der Heckscheibe dichtend aufnehmen und ein oberes Segment sich quer zur Fahrtrichtung erstreckt und im geschlossenen Verdeckzustand einen oberen Rand der Heckscheibe dichtend aufnimmt. Hierdurch wird im geschlossenen Verdeckzustand auf einfache Weise ein besonderes platzsparendes Ablegen des Verdeckgestänges zusammen mit dem zum Verdeckgestänge gehörenden Heckscheibenrahmen ermöglicht.

Besonders vorteilhaft ist die Heckscheibe in einem karosseriefest mit dem Cabrioletfahrzeug verbundenen Gehäuse gehaltert, so daß die Heckscheibe bei einer Öffnungs- oder Schließbewegung des Verdecks nicht mitbewegt wird. Zudem ergibt sich dadurch auf einfache Weise die Möglichkeit, daß die Heckscheibe mittels einer Führungsschiene und einem Antrieb, der etwa als Seilantrieb, hydraulischer Antrieb, mechanischer Antrieb mit Elektromotor oder Antrieb über eine Steigungswelle relativ zu dem Gehäuse und somit zu dem Cabriolet-Fahrzeug bewegbar ist.

Vorteilhaft ist das Verdeckgestänge als zwangsgesteuertes Lenkergetriebe ausgebildet, so daß eine Öffnungs- und Schließbewegung des Verdecks mittels einer Antriebsvorrichtung automatisierbar ist. Besonders vorteilhaft weist das Lenkergetriebe dabei auf jeder Fahrzeugseite einen Hauptlenker, ein mittleres Rahmenstück und ein vorderes Rahmenstück auf. Dabei ist zudem vorteilhaft auf bekannte Weise ein Frontspriegel an dem vorderen Rahmenstück vorgesehen, wobei der Frontspriegel im geschlossenen Verdeckzustand an einem Frontscheibenrahmen lösbar festgelegt ist.

Vorteilhaft umfaßt das Verdeckgestänge zwei zwangsgesteuerte Lenkergetriebe, wobei der Heckscheibenrahmen Bestandteil eines der Lenkergetriebe ist. Hierdurch läßt sich auch für ein aufwendiges Verdeckgestänge eine zwangsgesteuerte Öffnungsbewegung mit einer besonders optimierten Packstellung des abgelegten Verdecks erreichen.

Bevorzugt weist das Verdeckgestänge eines erfindungsgemäßen Verdecks eine Hauptlagereinheit auf, mittels derer das Verdeck als Gesamteinheit an einem Cabriolet-Fahrzeug anbringbar ist.

Weitere Vorteile und Merkmale eines erfindungsgemäßen Verdecks ergeben sich aus dem nachfolgend beschriebenen bevorzugten Ausführungsbeispiel sowie aus den abhängigen Ansprüchen.

Nachfolgend wird ein bevorzugtes Ausführungsbeispiel eines erfindungsgemäßen Verdecks beschrieben und anhand der anliegenden Zeichnungen näher erläutert.
- Fig. 1: zeigt eine schematische Seitenansicht eines erfindungsgemäßen Verdecks für ein Cabriolet-Fahrzeug in einem geschlossenen Verdeckzustand.
- Fig. 2: zeigt eine Seitenansicht des Verdecks aus Fig. 1 in einem geöffneten Verdeckzustand mit einer Heckscheibe in einem hochgefahrenen Zustand.
- Fig. 3: zeigt eine perspektivische Ansicht des Verdecks aus Fig. 1 von hinten in einem geschlossenen Verdeckzustand mit hochgefahrener Heckscheibe.
- Fig. 4: zeigt das Verdeck aus Fig. 3 mit abgesenkter Heckscheibe.
- Fig. 5: zeigt eine perspektivische Ansicht eines erfindungsgemäßen Verdecks in einem geschlossenen Verdeckzustand von hinten.
- Fig. 6: zeigt das Verdeck aus Fig. 5 in einem ersten Schritt einer Verdecköffnungsbewegung.
- Fig. 7: zeigt das Verdeck aus Fig. 5 in einem geöffneten Verdeckzustand.
- Fig. 8: zeigt eine Seitenansicht des Verdecks aus Fig. 5 in einem geschlossenen Verdeckzustand.
- Fig. 9: zeigt eine Seitenansicht des Verdecks aus Fig. 5 in einem geöffneten Verdeckzustand.

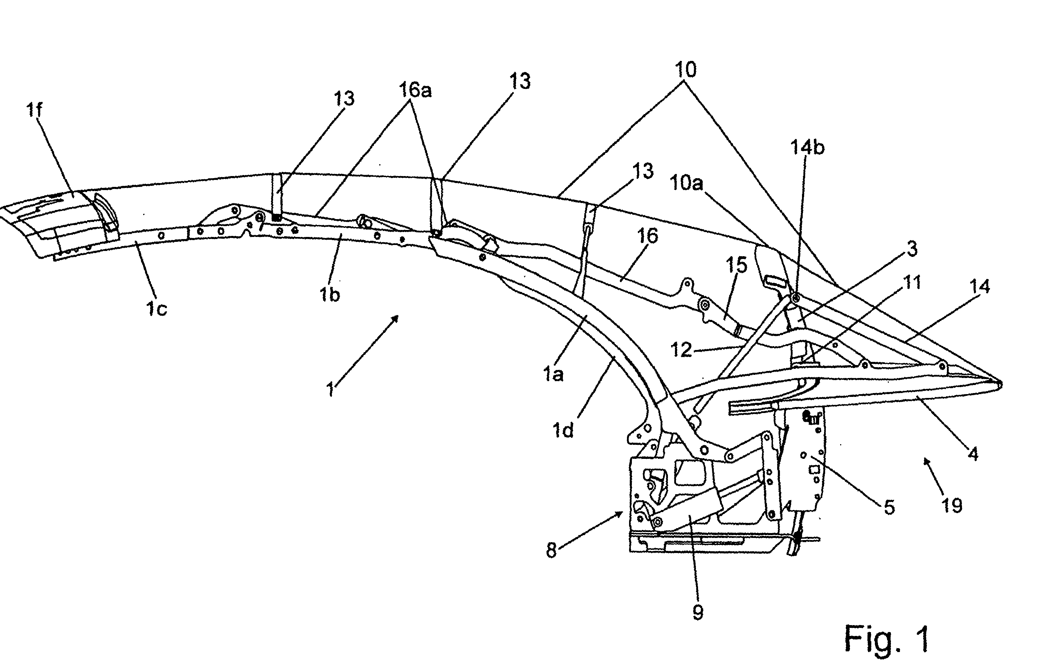

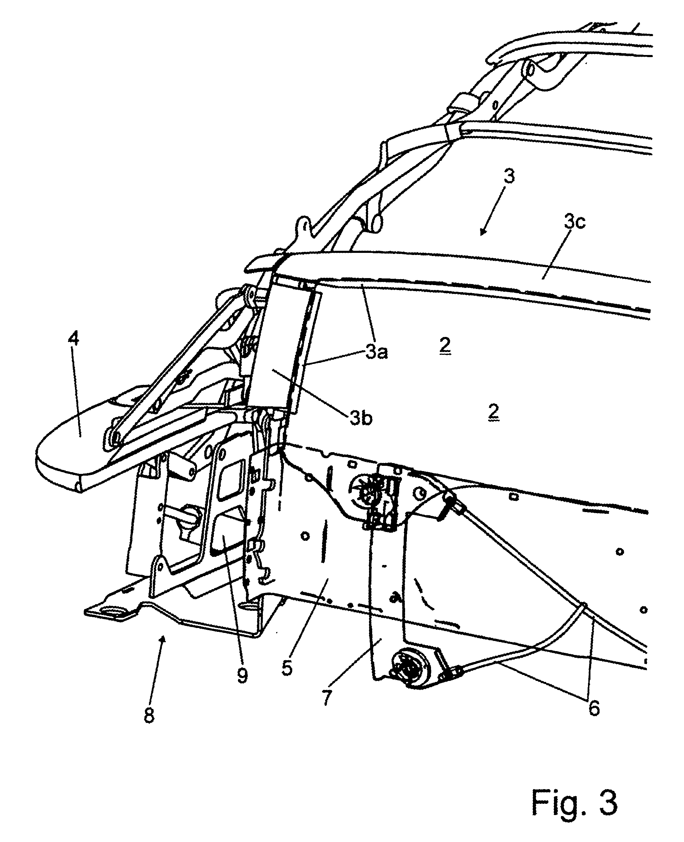

Wie Fig. 1 zeigt, umfaßt ein erfindungsgemäßes Verdeck ein als zwangsgesteuertes Lenkergetriebe ausgebildetes Verdeckgestänge 1, welches an einer zentralen Hauptlagereinheit 8 gelenkig angebracht ist. Die Hauptlagereinheit 8 umfaßt mindestens eine Antriebseinheit 9, die auf bekannte Weise als linearer Antriebszylinder ausgebildet ist. Das Verdeckgestänge umfaßt unter anderem einen Hauptlenker 1a, ein mittleres Rahmenstück 1b und ein vorderes Rahmenstück 1c, wobei auf dem vorderen Rahmenstück 1c ein Frontspriegel 1f festgelegt ist. Der Frontspriegel 1f ist als starres Schalenteil ausgebildet und umfaßt eine Verschlußvorrichtung, mittels derer der Frontspriegel 1f an einem Frontscheibenrahmen (nicht dargestellt) lösbar festlegbar ist. Ausgehend von dem Frontspriegel 1f erstreckt sich ein flexibler Verdeckbezug 10 über das Verdeckgestänge, wobei der Verdeckbezug 10 an mehreren Spriegeln 13 abgestützt ist. Heckseitig weist das Verdeck einen Verdeckstoffspannbügel 4 auf, an dem der Verdeckbezug 10 ebenfalls festgelegt ist. Aus der heckseitigen Ansicht des Verdecks gemäß Fig. 3 wird deutlich, daß jeweils ein Verdeckstoffspannbügel 4 auf jeder Fahrzeugseite vorgesehen ist, wobei ein Heckscheibenrahmen 3 zwischen den Verdeckstoffspannbügeln angeordnet ist. Der Verdeckbezug 10 ist nun sowohl an jedem der Verdeckstoffspannbügel 4 als auch an dem Heckscheibenrahmen 3 festgelegt. Dadurch, daß der Verdeckbezug zum einem in einem hinteren Abschlußbereich 10a an dem Heckscheibenrahmen festgelegt ist und zum anderen sich in den seitlichen Fahrzeugbereichen auch über die finnenartig ausgeformten Verdeckstoffspannbügel 4 erstreckt, wird eine ästhetisch besonders interessante Formgebung eines erfindungsgemäßen Verdecks erreicht. Der Heckscheibenrahmen 3 dient dabei zum einem einer dichtenden Festlegung des Verdeckbezugs 10 und zum anderen einer dichtenden Aufnahme einer Heckscheibe 2 im geschlossenen Verdeckzustand.

Die Heckscheibe 2 ist an einem Gehäuse 5 aufgenommen, welches wiederum an der Hauptlagereinheit 8 des Verdecks festgelegt ist, so daß das Gehäuse 5 insgesamt karosseriefest mit dem Cabriolet-Fahrzeug verbunden ist. Relativ zu dem Gehäuse 5 ist die Heckscheibe 2 mittels einer an dem Gehäuse 5 vorgesehenen Führungsschiene 7 und einem Seilantrieb 6 relativ zu dem Gehäuse 5 hochfahrbar und absenkbar. Dabei zeigt Fig. 3 einen geschlossenen Verdeckzustand, bei dem die Heckscheibe 2 hochgefahren ist und in den Heckscheibenrahmen 3 eingreift. Der Heckscheibenrahmen 3 weist dabei nutenartige Ausnehmungen 3a auf, die die Heckscheibe 2 umgreifen und zudem auf bekannte Weise Dichtlippen zur Abdichtung der Heckscheibe 2 umfassen.

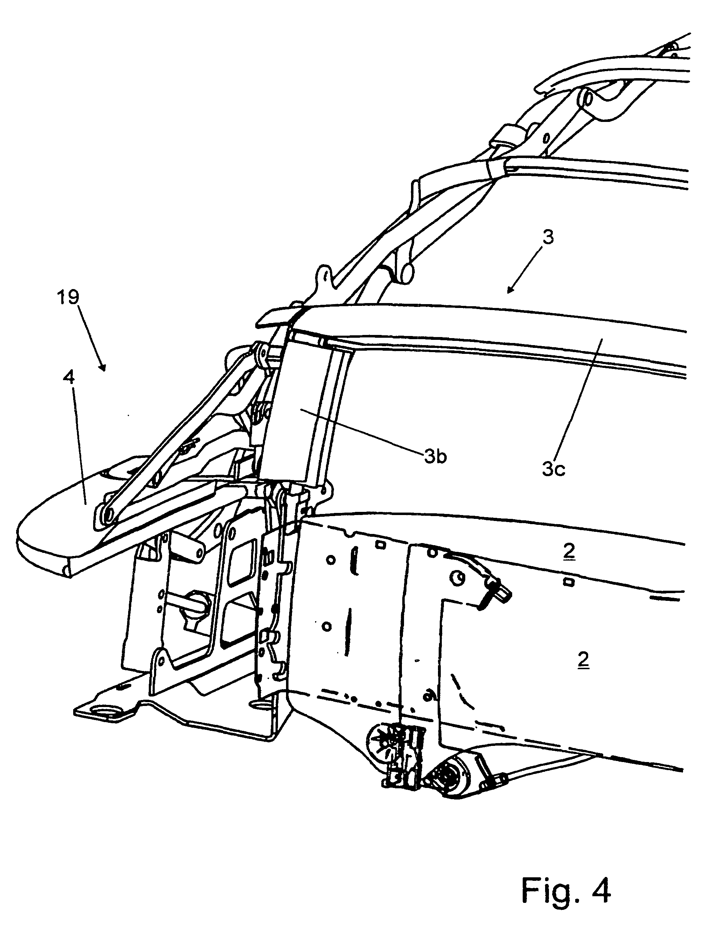

Fig. 4 zeigt das Verdeck in einem geschlossenen Zustand, wobei die Heckscheibe 2 sich in einem abgesenkten Zustand befindet. Diese Kombination von Verdeck- und Heckscheibenposition ermöglicht vorteilhaft eine Beladung des Cabriolet-Fahrzeugs mit langen, schmalen Transportgütern. Ein weiterer Vorteil einer im geschlossenen Verdeckzustand absenkbaren Heckscheibe stellt auch die Möglichkeit dar, besonders schnell freie Sicht nach hinten zu erlangen, falls die Heckscheibe etwa beschlagen oder vereist ist. Nicht zuletzt wird hierdurch jedoch eine weitere Alternative geschaffen, eine gute Durchlüftung des Fahrzeugs zu gewährleisten, ohne das Cabrioletverdeck vollständig öffnen zu müssen.

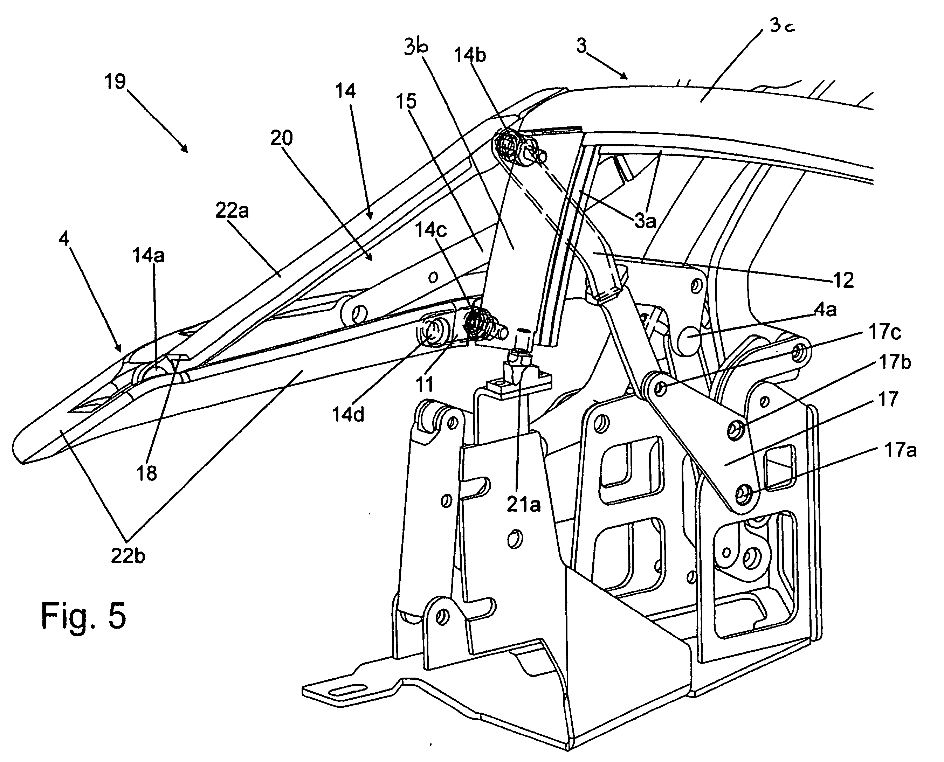

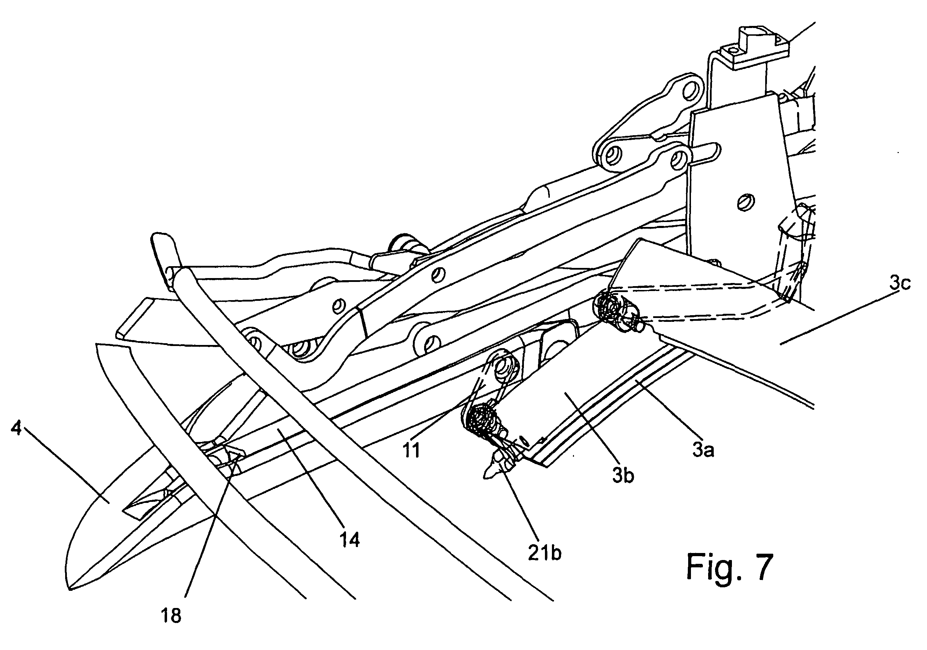

Die Darstellungen des erfindungsgemäßen Verdecks in Fig. 5 bis Fig. 9 zeigen das Verdeck unter Weglassung des Gehäuses 5 und der Heckscheibe 2. Die in Fig. 5 bis Fig. 9 gezeigte mechanische Ausführungsform ist funktionsidentisch mit der Ausführungsform gemäß Fig. 1 bis Fig. 4; lediglich die genaue Formgebung einiger Bauteile ist geringfügig abweichend. Insbesondere sind der Verdeckstoffspannbügel 4 und der Finnenlenker 14 in den Fig. 1 bis Fig. 4 unter Weglassung von aufsetzbaren Formteilen 22a, 22b dargestellt, um ihre kinematische Funktion und Anlenkung besser zu verdeutlichen. Bei den Fig. 5 bis Fig. 9 handelt es sich um eine vollständige Darstellung mit den Schalenteilen 22a, 22b.

Insbesondere weist ein Finnenlenker 14 in der Ausformung der Gestängeteile gemäß Fig. 5 bis Fig. 9, das heißt in der vollständigen Ausformung inklusive des vorgenannten Aufsatz-Formteils 22a, eine Profilierung 18 auf, die es besonders vorteilhaft ermöglicht, den Verdeckstoff auf dem Finnenlenker 14 festzulegen oder auch zu führen. Durch eine solche Festlegung und/oder Führung bzw. Abstützung durch starre Gestängeteile sind seitlich der Heckscheibe angeordnete und zum Heck des Fahrzeugs gerichtete Finnen 19 auf eine Weise ausbildbar, die eine straffe und wohlkonturierte Formung des Verdeckstoffs, durch den zumindest Teile der Außenflächen der Finnen ausgebildet sind, ermöglicht. Der den Stoff stützende, im geschlossenen Verdeckzustand schräg im Raum stehende und zum Fahrzeugheck hin abfallende Finnenlenker 14 ist als in sich steifes Konstruktionsteil ausgebildet. Hierdurch wird nicht nur eine gute Ausformung der Finnen 19, sondern auch eine dauerhafte Formgebung selbst bei alterungsbedingter Dehnung des Verdeckstoffs gewährleistet.

Um Nachteile durch den Einsatz des steifen Finnenlenkers 14 hinsichtlich einer raumsparenden Ablage des geöffneten Verdecks zu vermeiden, ist der im geschlossenen Verdeckzustand schräg im Raum stehende Finnenlenker 14 mittels Anlenkungen und weiterer Lenkerelemente so in die Gesamtkinematik des Verdecks integriert, daß der Lenker bei einer Öffnung des Verdecks zwangsgesteuert verschwenkbar ist und in einem geöffneten Verdeckzustand durch Parallelstellung zu anderen Gestängeteilen raumoptimiert ablegbar ist.

Die Verdeckstoffspannbügel 4 sind um ein Gelenk 4a schwenkbar gelagert. An dem Verdeckstoffspannbügel 4 ist heckseitig in einem Gelenk 14a der Finnenlenker 14 gelenkig festgelegt. Etwa auf halber Länge des Verdeckstoffspannbügels ist zudem eine Spannstange 15 an dem Verdeckstoffspannbügel gelenkig festgelegt. Der Finnenlenker 14 ist andernendig in einem Drehgelenk 14b mit einem Spriegellenker 12 und zugleich mit einem seitlichen Element 3b des Heckscheibenrahmens 3 drehbar verbunden. Das seitliche Element 3b des Heckscheibenrahmens ist andernendig in einem Gelenk 14c mit einem Zwischenlenker 11 gelenkig verbunden, welcher wiederum in einem Gelenk 14d mit dem Verdeckstoffspannbügel 4 gelenkig verbunden ist. Insgesamt wird durch die Elemente Verdeckstoffspannbügel 4, Finnenlenker 14, seitliches Element 3b des Heckscheibenrahmens 3 und Zwischenlenker 11 mittels ihrer gelenkigen Verbindungen in den Drehgelenken 14a, 14b, 14c und 14d ein Viergelenk 20 ausgebildet. Ein oberes Segment 3c des Heckscheibenrahmens 3, an dem zugleich nach Art eines Eckspriegels ein hinterer Abschlußbereich 10a des Verdeckbezugs 10 festgelegt ist, ist mit dem Spriegellenker 12 starr verbunden.

Da das seitliche Element 3b des Heckscheibenrahmens 3 gegenüber dem Spriegellenker 12 verschwenkbar ist, sind somit auch das seitliche Element 3b des Heckscheibenrahmens 3 und das eckspriegelartige, obere Element 3c des Heckscheibenrahmens 3 zueinander bewegbar. Der Spriegellenker 12 ist an seinem dem Eckspriegel abgewandten Ende in einem Gelenk 17c mit einer Lenkerscheibe 17 gelenkig verbunden. Die Lenkerscheibe 17 ist in einem weiteren Gelenk 17a an der Hauptlagereinheit 8 angelenkt. Zudem ist ein Dachrahmenlenker 1d, der im geschlossenen Verdeckzustand im wesentlichen parallel zu dem Hauptlenker 1a angeordnet ist, mit einem gekröpften Steuerlenker 1e gelenkig verbunden, welcher andemendig in einem Gelenk 17b an der Lenkerscheibe 17 gelenkig aufgenommen ist.

Das Viergelenk 20, der Spriegellenker 12 und somit das obere Element 3c des Heckscheibenrahmens 3 sowie die Spannstange 15 mit einem ihr zugeordneten Gegenstück 16 (siehe Fig. 1) können nunmehr verschwenkt werden, ohne daß die weiteren Gestängeteile des Verdeckgestänges 1 bewegt werden müssen. Insgesamt ist somit das erfindungsgemäße Verdeck gemäß den bevorzugten Ausführungsbeispiel in zwei separate, jeweils in sich zwangsgesteuerte Lenkergetriebe aufgeteilt. Dabei ist zudem als besonders vorteilhafte Ausbildung eine Verkopplung der beiden zwangsgesteuerten Lenkergetriebe dadurch vorgesehen, daß das Gegenstück 16 über weitere Steuerlenker 16a mit dem den Frontspriegel 1f tragenden vorderen Rahmenstück 1c in Verbindung steht. Hierdurch ist ein zwangsgesteuertes gleichzeitiges Aufschwenken des Frontspriegels 1f zusammen mit dem Verdeckstoffspannbügel 4 realisiert. Dies ermöglicht zu Beginn einer Verdecköffnungsbewegung eine gleichzeitige Entspannung des Verdeckbezugs 10 sowohl im Heckbereich als auch im Frontbereich des Verdecks. Da der Verdeckstoff an dem oberen Segment 3c des Heckscheibenrahmens 3 festliegt, wäre durch eine zunächst lediglich heckseitige Entspannung Verdeckbezugs eine zeitweise ungleiche Belastung der vorderen Gestängeteile durch Spannkräfte gegeben, was langfristig die Gefahr eines Verklemmens von Gestängeteilen mit sich bringt.

Die Erfindung funktioniert nun wie folgt:

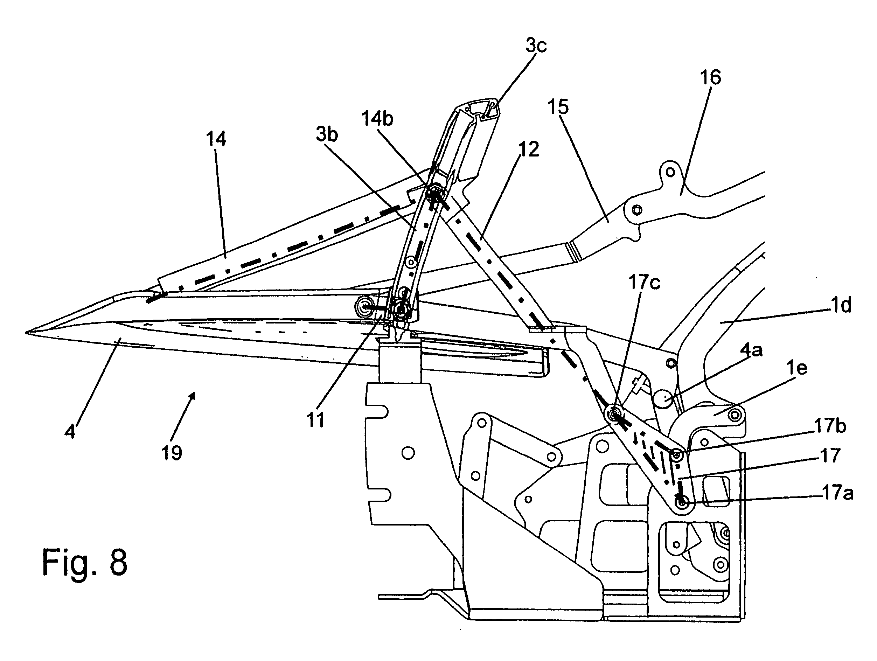

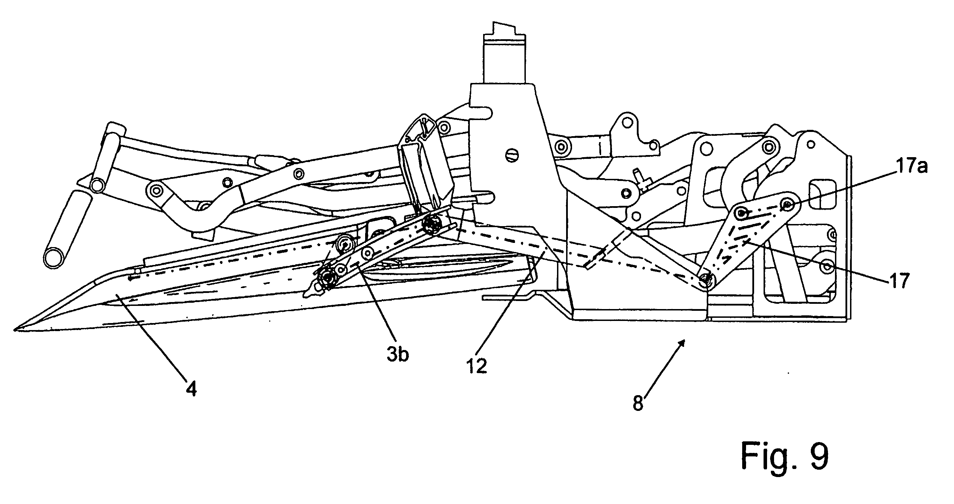

Ausgehend von dem geschlossenen Verdeckzustand gemäß Fig. 1 wird zur Einleitung einer Verdecköffnungsbewegung zunächst die Heckscheibe 2 abgesenkt. Hierdurch wird der Heckscheibenrahmen 3 bewegbar, ohne daß die Heckscheibe 2 beschädigt werden kann. Sodann wird das zuvor beschriebene Lenkergetriebe, welches der Ansteuerung des Heckscheibenrahmens 3 und des Verdeckstoffspannbügels 4 zugeordnet ist, verschwenkt. Diese Verschwenkung geschieht vorteilhaft mit einer separaten Antriebsvorrichtung (nicht dargestellt). Dabei werden zunächst die Spannstange 15 und ihr Gegenstück 16 aus einer im geschlossenen Verdeckzustand vorliegenden Übertotpunktlage herausbewegt, so daß die Spannstange 15 und ihr Gegenstück 16 gemäß Fig. 1 nach unten wegschwenken. Der Spriegellenker 12 wird dabei gemäß Fig. 1 entgegen und gemäß Fig. 5 im Uhrzeigersinn verschwenkt. Dadurch wird der Finnenlenker 14 auf Zug belastet. Dies führt zu einem Hochschwenken des Verdeckstoffspannbügels 4 und in einem ersten Bewegungsabschnitts zu einer linearen Wegbewegung des seitlichen Elements 3b des Heckscheibenrahmens 3 von einem Auflager 21a (Figur 5), an dem das seitliche Element 3b im geschlossenen Verdeckzustand mittels eines Zentrierstifts 21 b gehalten ist. Der Finnenlenker 14 schwenkt bei dieser zwangsgesteuerten Bewegung um das Drehgelenk 14a in Richtung des Verdeckstoffspannbügels 4. Der Zwischenlenker 11 sorgt bei der Bewegung des seitlichen Elements 3b relativ zu dem Verdeckstoffspannbügel 4 für einen Längenausgleich, so daß die zwangsgesteuerte Bewegung überhaupt möglich ist. Insgesamt kann dieser erste Abschnitt der Verdecköffnungsbewegung auch dadurch beschrieben werden, daß die Elemente Finnenlenker 14, Spriegellenker 12 und Verdeckstoffspannbügel 4 ursprünglich im wesentlichen ein Dreieck aufgespannt haben (siehe Fig. 8) und nach ihrer Verschwenkung im wesentlichen parallel angeordnet sind (siehe Fig. 9). Technisch handelt es sich dabei ebenfalls um die Bewegung eines Viergelenks, welches die Gelenke 14a, 14b, 4a und 17c umfaßt. Die Lenkerscheibe 17 wird während dies vorbeschriebenen ersten Schritts der Verdecköffnungsbewegung nicht verschwenkt. Simultan zu dem beschriebenen Vorgang wird bedingt durch die Bewegung des Gegenstücks 16 auch das Hochschwenken des Frontspriegels 1f eingeleitet, wodurch bereits unmittelbar nach Einleitung der Verdecköffnugnsbewegung der Verdeckbezug 10 über seine gesamte Länge entspannt wird.

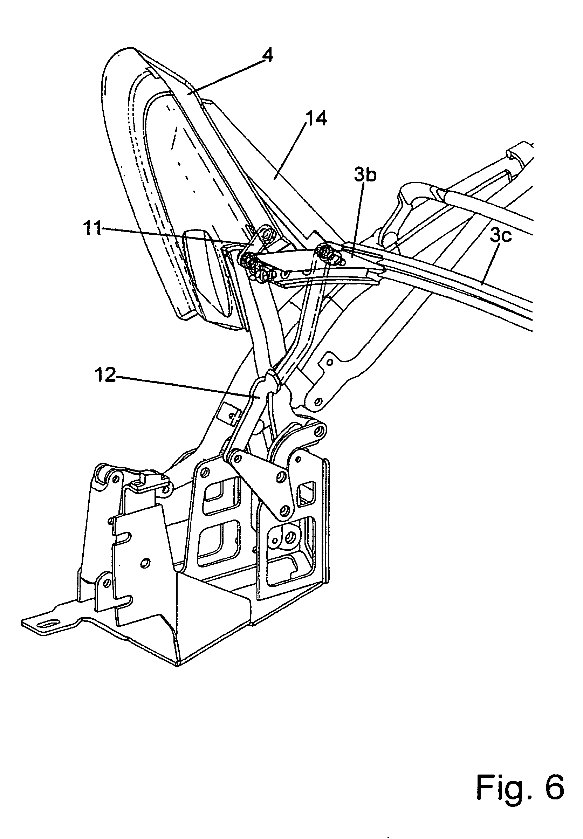

Nach einem ersten Schritt der Verdecköffnungsbewegung befinden sich die Verdeckstoffspannbügel 4 in einem hochgeschwenkten Zustand, siehe Fig. 6. Hierbei ist zum einem der Verdeckbezug 10 entspannt, und zum anderen wird im Heckbereich des Fahrzeugs die Möglichkeit geschaffen, einen Heckdeckel auf bekannte Weise entgegen der Fahrtrichtung zu öffnen, um einen Stauraum für das im späteren Verlauf zusammengelegte Verdeck freizugeben.

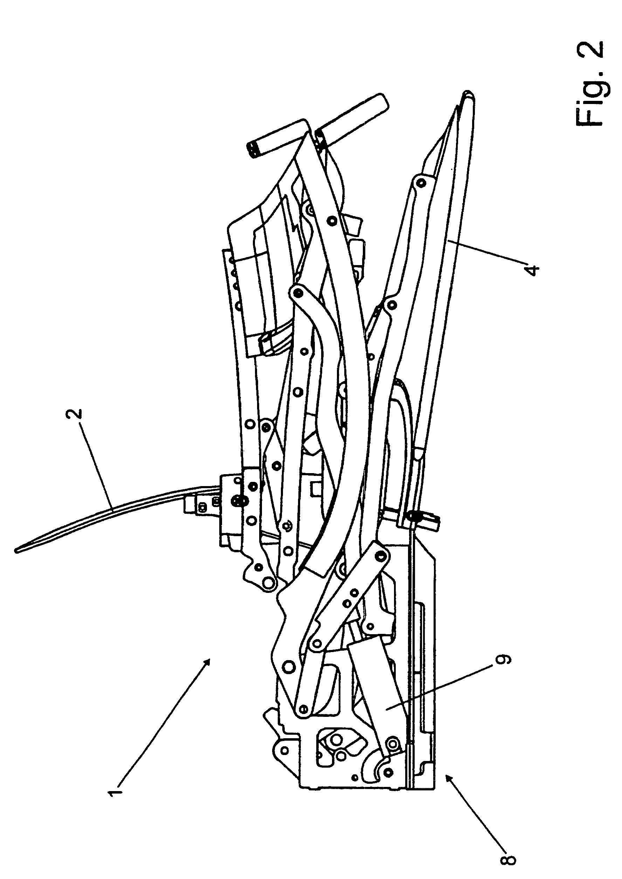

In einem zweiten Schritt der Verdecköffnungsbewegung wird nunmehr das andere zwangsgesteuerte Lenkergetriebe, welches vor allem den Haupttenker 1a, das mittlere Rahmenstück 1b und das vordere Rahmenstück 1c umfaßt, mittels der Antriebsvorrichtung 9 bewegt, so daß sich dieser Teil des Verdeckgestänges 1 in Heckrichtung des Fahrzeugs bewegt, wobei die Gestängeteile so zueinander verschwenkt werden, daß eine kompakte Faltstellung des Verdecks erreicht wird. Nach diesem zweiten Schritt der Verdecköffnungsbewegung stellt das Verdeck ein zusammengefaltetes Paket der Gestängeteile dar, welches aber immer noch in einer in Fahrtrichtung hochgeschwenkten Position, wie sie zumindest für die die Verdeckstoffspannbügel 4 umfassende zwangsgesteuerte Lenkerkette in Fig. 6 dargestellt ist, befindet. In einem dritten und letzten Schritt der Verdecköffnungsbewegung wird das zusammengelegte Paket nunmehr in den Stauraum abgesenkt, in dem es eine zusammengefaltete Ablagestellung gemäß Fig. 2 bzw. Fig. 7 und Fig. 9 einnimmt. Dabei wird die Lenkerscheibe 17 um das Gelenk 17a, über welches sie an dem Hauptlager 8 angelenkt ist, verschwenkt.

In dieser Ablagestellung besteht nunmehr die Möglichkeit, die Heckscheibe 2 wieder hochzufahren. Diese Stellung ist in Fig. 2 dargestellt. In dieser Stellung kann die Heckscheibe 2 vorteilhaft die Funktion eines Windschutzes übernehmen, wodurch die Insassen des Cabriolet-Fahrzeugs auch im geöffneten Verdeckzustand durch besonders wenige Luftverwirbelungen gestört werden.

Der entsprechende Schließvorgang des erfindungsgemäßen Verdecks verläuft in Umkehr der zuvor beschriebenen Kinematik.

## Patentansprüche

1. Verdeck für ein Cabriolet-Fahrzeug, umfassend
einen flexiblen Verdeckbezug (10),
ein Verdeckgestänge (1) und
einen seitlich angeordneten Verdeckstoffspannbügel (4),
wobei der Verdeckstoffspannbügel (4) in einem geschlossenen Verdeckzustand Teil einer im wesentlichen finnenartigen heckseitigen Ausformung (19) des Verdecks ist,
wobei ein heckseitig an dem Verdeckstoffspannbügel (4) gelenkig festgelegter Finnenlenker (14) vorgesehen ist, welcher im geschlossenen Verdeckzustand unterstützend auf den Verdeckstoff wirkt,
**dadurch gekennzeichnet,**
**daß** der Finnenlenker (14) als in sich steifes, auf Zug und Schub belastbares Konstruktionsteil ausgebildet ist.

2. Verdeck für ein Cabriolet-Fahrzeug nach Anspruch 1, **dadurch gekennzeichnet, daß** der Finnenlenker (14) und der Verdeckstoffspannbügel (4) in dem geschlossenen Verdeckzustand Teile eines aufgespannten Dreiecks sind.

3. Verdeck für ein Cabriolet-Fahrzeug nach Anspruch 1 oder 2, **dadurch gekennzeichnet, daß** der Finnenlenker (14) im Zuge einer Öffnungsbewegung des Verdecks in Richtung auf den Verdeckstoffspannbügel (4) schwenkbar ist.

4. Verdeck für ein Cabriolet-Fahrzeug nach einem der Ansprüche 1 bis 3, **dadurch gekennzeichnet, daß** der Finnenlenker (14) in einem geöffneten Verdeckzustand im wesentlichen parallel zu dem Verdeckstoffspannbügel (4) angeordnet ist.

5. Verdeck für ein Cabriolet-Fahrzeug nach einem der Ansprüche 1 bis 4, **dadurch gekennzeichnet, daß** eine Spannstage (15) und ein Gegenstück (16) zu der Spannstange vorgesehen sind, welche in dem geschlossenen Verdeckzustand in einer Übertotpunktlage zueinander befindlich sind und den Verdeckstoffspannbügel (4) abstützen.

6. Verdeck für ein Cabriolet-Fahrzeug nach einem der Ansprüche 1 bis 5, **dadurch gekennzeichnet, daß** ein Spriegellenker (12) vorgesehen ist, wobei der Spriegellenker (12), der Finnenlenker (13) und der Verdeckstoffspannbügel (4) in dem geschlossenen Verdeckzustand ein Dreieck aufspannen.

7. Verdeck für ein Cabriolet-Fahrzeug nach Anspruch 6, **dadurch gekennzeichnet, daß** der Spriegellenker (12) in einem geöffneten Verdeckzustand im wesentlichen parallel zu dem Finnenlenker (13) angeordnet ist.

8. Verdeck für ein Cabriolet-Fahrzeug nach Anspruch 6 oder 7, **dadurch gekennzeichnet, daß** ein oberes Segment (3c) eines Heckscheibenrahmens (3) mit dem Spriegellenker (12) starr verbunden ist, wobei ein hinterer Abschlußbereich (10a) des Verdeckbezugs (10) an dem oberen Segment (3c) festgelegt ist.

9. Verdeck für ein Cabriolet-Fahrzeug nach einem der Ansprüche 1 bis 8, **dadurch gekennzeichnet, daß** ein seitliches Element (3b) vorgesehen ist, wobei das seitliche Element (3b) einen im geschlossenen Verdseckzustand im wesentlichen senkrecht ausgerichteten seitlichen Rahmenbereich einer Heckscheibe (2) ausbildet.

10. Verdeck für ein Cabriolet-Fahrzeug nach Anspruch 9, **dadurch gekennzeichnet, daß** ein mit dem Verdeckstoffspannbügel (4) und dem seitlichen Element (3b) jeweils gelenkig verbundener Zwischenlenker (11) vorgesehen ist, so daß der Finnenlenker (14), der Verdeckstoffspannbügel (4), das seitliche Element (3b) und der Zwischenlenker (11) insgesamt ein Viergelenk (16) ausbilden).

11. Verdeck für ein Cabriolet-Fahrzeug nach einem der Ansprüche 1 bis 10, ferner umfassend
eine starre, bewegbar gehalterte Heckscheibe (2), wobei die Heckscheibe (2) zwischen einer abgesenkten und einer hochgefahrenen Heckscheibenstellung bewegbar ist, und
einen mit dem Verdeckgestänge (1) verbundenen Heckscheibenrahmen (3), wobei dem Heckscheibenrahmen (3) in einem geöffneten Verdeckzustand eine abgelegte Position und in einem geschlossenen Verdeckzustand eine aufgeschwenkte Position zugeordnet ist,
wobei der Heckscheibenrahmen (3) in dem geöffneten Verdeckzustand von der Heckscheibe (2) weggeschwenkt ist, und
wobei die Heckscheibe (2) in dem geöffneten Verdeckzustand zwischen der abgesenkten und der hochgefahrenen Heckscheibenstellung bewegbar ist.

12. Verdeck nach Anspruch 11, **dadurch gekennzeichnet, daß** die Heckscheibe (2) in dem geschlossenen Verdeckzustand zumindest in der hochgefahrenen Heckscheibenstellung in eine nutartige Ausnehmung (3a) des Heckscheibenrahmens (3) eingreift.

13. Verdeck nach Anspruch 11 oder 12, **dadurch gekennzeichnet, daß** das Verdeckgestänge (1) in einem heckseitigen Endbereich zwei jeweils seitlich angeordnete Verdeckstoffspannbügel (4) aufweist.

14. Verdeck nach Anspruch 13, **dadurch gekennzeichnet, daß** der Heckscheibenrahmen (3) zwischen den Verdeckstoffspannbügeln (4) angeordnet ist.

15. Verdeck nach einem der Ansprüche 11 bis 14, **dadurch gekennzeichnet, daß** der Heckscheibenrahmen (3) mehrere, zueinander bewegbare Segmente (3b, 3c) umfaßt.

16. Verdeck nach Anspruch 15, **dadurch gekennzeichnet, daß** der Heckscheibenrahmen (3) zwei jeweils seitlich angeordnete und im geschlossenen Verdeckzustand Seitenränder der Heckscheibe (2) dichtend aufnehmende Segmente (3b) und ein quer zur Fahrtrichtung angeordnetes, einen oberen Rand der Heckscheibe (2) dichtend aufnehmendes Segment (3c) umfaßt.

17. Verdeck nach einem der Ansprüche 11 bis 16, **dadurch gekennzeichnet, daß** die Heckscheibe (2) in einem karosseriefest mit dem Cabriolet-Fahrzeug verbunden Gehäuse (5) gehaltert ist.

18. Verdeck nach Anspruch 17, **dadurch gekennzeichnet, daß** die Heckscheibe (2) mittels eines Antriebs (6) und einer Führungsschiene (7) relativ zu dem Gehäuse (5) bewegbar ist.

19. Verdeck nach einem der Ansprüche 11 bis 18, **dadurch gekennzeichnet, daß** das Verdeckgestänge (1) als zwangsgesteuertes Lenkergetriebe ausgebildet ist.

20. Verdeck nach Anspruch 19, **dadurch gekennzeichnet, daß** das Lenkergetriebe auf jeder Fahrzeugseite einen Hauptlenker (1a), ein mittleres Rahmenstück (1b) und ein vorderes Rahmenstück (1c) umfaßt.

21. Verdeck nach einem der Ansprüche 11 bis 20, **dadurch gekennzeichnet, daß** das Verdeckgestänge (1) zwei zwangsgesteuerte Lenkergetriebe umfaßt, wobei der Heckscheibenrahmen (3) Bestandteil eines der Lenkergetriebe ist.

22. Verdeck nach einem der Ansprüche 11 bis 21, **dadurch gekennzeichnet, daß** das Verdeckgestänge (1) einen Fronstspriegel (1d) umfaßt, wobei der Frontspriegel (1d) im geschlossenen Verdeckzustand an einem Frontscheibenrahmen lösbar festgelegt ist.

23. Verdeck nach einem der Ansprüche 11 bis 22, **dadurch gekennzeichnet, daß** ein heckseitiger Abschlußbereich (10a) des Verdeckbezugs (10) an dem Heckscheibenrahmen (3) festgelegt ist.

24. Verdeck nach einem der Ansprüche 11 bis 23, **dadurch gekennzeichnet, daß** das Verdeckgestänge (1) eine Hauptlagereinheit (8) umfaßt.

25. Verdeck nach einem der Ansprüche 11 bis 24, **dadurch gekennzeichnet, daß** das Verdeckgestänge (1) mittels einer Antriebsvorrichtung (9) antreibbar ist.

26. Verdeck nach einem der Ansprüche 1 bis 25, **dadurch gekennzeichnet, daß** ein Frontspriegel (1d) über Steuerlenker (16a) so mit dem Verdeckstoffspannbügel (4) in Verbindung steht, daß ein Hochschwenken des Verdeckstoffspannbügels (4) zugleich mit einem Hochschwenken des Frontspriegels (1f) erfolgt.

27. Verdeck nach einem der Ansprüche 1 bis 26, **dadurch gekennzeichnet, daß** der Finnenlenker (14) die finnenartige heckseitige Ausformung (19) unterstützt.

28. Verdeck nach einem der Ansprüche 1 bis 27, **dadurch gekennzeichnet, daß** der Finnenlenker (14) eine schräg abfallende Oberkante der finnenartigen heckseitigen Ausformung (19) ausbildet.

29. Verdeck nach einem der Ansprüche 1 bis 28, **dadurch gekennzeichnet, daß** zu einer Unterstützung der finnenartigen heckseitigen Ausformung (19) ein aufsetzbares Formteil (22a) an dem Finnenlenker (14) festlegbar ist.

30. Verdeck nach einem der Ansprüche 1 bis 29, **dadurch gekennzeichnet, daß** zu einer Unterstützung der finnenartigen heckseitigen Ausformung (19) ein aufsetzbares Formteil (22b) an dem Verdeckstoffspannbügel (4) festlegbar ist.

31. Verdeck nach einem der Ansprüche 1 bis 30, **dadurch gekennzeichnet, daß** der Finnenlenker an gegenüberliegenden Enden jeweils gelenkig festgelegt ist, wobei der Abstand der gelenkigen Festlegungen voneinander während einer Öffnungsbewegung des Verdecks unveränderlich ist.

## Claims

1. A top for a convertible vehicle, comprising
a flexible top fabric (10),
a top linkage (1) and
a laterally arranged top-cloth tensioning bracket (4),
the top-cloth tensioning bracket (4), in a closed state of the top, being part of an essentially fin-like, rear-side formation (19) of the top, a fin link (14), which is fixed in an articulated manner on the rear side of the top-cloth tensioning bracket (4), being provided, which link, in the closed state of the top, acts in a supporting manner on the top cloth,
**characterized in that**
the fin link (14) is designed as an inherently rigid constructional part which can be subjected to tensile and longitudinal loads.

2. The top for a convertible vehicle as claimed in claim 1, wherein, in the closed state of the top, the fin link (14) and the top-cloth tensioning bracket (4) are parts of an expanded triangle.

3. The top for a convertible vehicle as claimed in claim 1 or 2, wherein in the course of an opening movement of the top, the fin link (14) can be pivoted in the direction of the top-cloth tensioning bracket (4).

4. The top for a convertible vehicle as claimed in one of claims 1 to 3, wherein, in an open state of the top, the fin link (14) is arranged essentially parallel to the top-cloth tensioning bracket (4).

5. The top for a convertible vehicle as claimed in one of claims 1 to 4, wherein a tensioning rod (15) and a counterpart (16) to the tensioning rod are provided, which, in the closed state of the top, are in a position beyond a dead center with respects to each other and support the top-cloth tensioning bracket (4).

6. The top for a convertible vehicle as claimed in one of claims 1 to 5, wherein a bow link (12) is provided, the bow link (12), the fin link (13) and the top-cloth tensioning bracket (4), in the closed state of the top, defining a triangle.

7. The top for a convertible vehicle as claimed in claim 6, wherein in an open state of the top, the bow link (12) is arranged essentially parallel to the fin link (13).

8. The top for a convertible vehicle as claimed in claim 6 or 7, wherein an upper segment (3c) of a rear window frame (3) is connected rigidly to the bow link (12), a rear end region (10a) of the top fabric (10) being fixed on the upper segment (3c).

9. The top for a convertible vehicle as claimed in one of claims 1 to 8, wherein a lateral element (3b) is provided, the lateral element (3b) forming a lateral frame region of a rear window (2), which region is orientated essentially vertically in the closed state of the top.

10. The top for a convertible vehicle as claimed in claim 9, wherein an intermediate link (11) which is connected in each case in an articulated manner to the top-cloth tensioning bracket (4) and the lateral element (3b) is provided, so that the fin link (14), the top-cloth tensioning bracket (4), the lateral element (3b) and the intermediate link (11) together form a four-bar linkage (20).

11. The top for a convertible vehicle as claimed in one of claims 1 to 10, furthermore comprising
a rigid, movably mounted rear window (2), the rear window (2) being movable between a lowered and a raised rear window position, and
a rear window frame (3) connected to the top linkage (1), the rear window frame (3), in an open state of the top, being assigned a storage position and, in a closed state of the top, being assigned a pivoted-up position,
the rear window frame (3), in the open state of the top, being pivoted away from the rear window (2), and
the rear window (2), in the open state of the top, being movable between the lowered and the raised rear window position.

12. The top as claimed in claim 11, wherein in the closed state of the top, the rear window (2) engages, at least in the raised rear window position, in a groove-like recess (3a) of the rear window frame (3).

13. The top as claimed in claim 11 or 12, wherein the top linkage (1) has, in a rear-side end region, two top-cloth tensioning brackets (4) which are in each case arranged laterally.

14. The top as claimed in claim 13, wherein the rear window frame (3) is arranged between the top-cloth tensioning brackets (4).

15. The top as claimed in one of claims 11 to 14, wherein the rear window frame (3) comprises a plurality of segments (3b, 3c) which are movable with respect to one another.

16. The top as claimed in claim 15, wherein the rear window frame (3) has two segments (3b) which are in each case arranged laterally and, in the closed state of the top, hold side edges of the rear window (2) in a tight-fitting manner, and a segment (3c) which is arranged transversely to the direction of travel and holds an upper edge of the rear window (2) in a tight-fitting manner.

17. The top as claimed in one of claims 11 to 16, wherein the rear window (2) is mounted in a housing (5) which is connected to the convertible vehicle by being fixed on the bodywork.

18. The top as claimed in claim 17, wherein the rear window (2) can be moved relative to the housing (5) by means of a drive (6) and a guide rail (7).

19. The top as claimed in one of claims 11 to 18, wherein the top linkage (1) is designed as a positively controlled link mechanism.

20. The top as claimed in claim 19, wherein the link mechanism comprises, on each side of the vehicle, a main link (1a), a central frame piece (1b) and a front frame part (1c).

21. The top as claimed in one of claims 11 to 20, wherein the top linkage (1) comprises two positively controlled link mechanisms, the rear window frame (3) being part of one of the link mechanisms.

22. The top as claimed in one of claims 11 to 21, wherein the top linkage (1) comprises a front bow (1d), the front bow (1d), in the closed state of the top, being fixed detachably on a front window frame.

23. The top as claimed in one of claims 11 to 22, wherein a rear-side end region (10a) of the top fabric (10) is fixed on the rear window frame (3).

24. The top as claimed in one of claims 11 to 23, wherein the top linkage (1) comprises a main bearing unit (8).

25. The top as claimed in one of claims 11 to 24, wherein the top linkage (1) can be driven by means of a driving device (9).

26. The top as claimed in one of claims 1 to 25, wherein a front bow (1d) is connected via control links (16a) to the top-cloth tensioning bracket (4) in such a manner that the top-cloth tensioning bracket (4) is pivoted upward at the same time as the front bow (1f) is pivoted upward.

27. The top as claimed in one of claims 1 to 26, wherein the fin link (14) supports the fin-like, rear-side formation (19).

28. The top as claimed in one of claims 1 to 27, wherein the fin link (14) forms an obliquely downwardly sloping upper edge of the fin-like, rear-side formation (19).

29. The top as claimed in one of claims 1 to 28, wherein a detachable shaped part (22a) can be fixed on the fin link (14) to support the fin-like, rear-side formation (19).

30. The top as claimed in one of claims 1 to 29, wherein a detachable shaped part (22b) can be fixed on the top-cloth tensioning bracket (4) to support the fin-like, rear-side formation (19).

31. The top as claimed in one of claims 1 to 30, wherein the fin link is fixed in each case in an articulated manner on opposite ends, the distance of the articulated fixing points from one another not being changed during an opening movement of the top.

## Revendications

1. Capote pour véhicule cabriolet, comportant
une garniture de capote flexible (10),
un ensemble de barres de capote (1) et
un étrier tendeur de tissu de capote (4) agencé latéralement,
l'étrier tendeur de tissu de capote (4) faisant partie, lorsque la capote est
fermée, d'une conformation arrière (19), sensiblement en aileron, de la capote,
un bras d'aileron (14) étant prévu, qui est articulé à l'arrière sur l'étrier tendeur de tissu de capote (4) et qui agit en plus sur le tissu de capote lorsque la capote est fermée,
**caractérisée en ce que** le bras d'aileron (14) est conformé en élément de construction rigide qui peut supporter un effort en traction et poussée.

2. Capote pour véhicule cabriolet selon la revendication 1, **caractérisée en ce que** le bras d'aileron (14) et l'étrier tendeur de tissu de capote (4) font partie d'un triangle étiré lorsque la capote est fermée.

3. Capote pour véhicule cabriolet selon la revendication 1 ou 2, **caractérisée en ce que** le bras d'aileron (14) est apte à pivoter en direction de l'étrier tendeur de tissu de capote (4) au cours d'un mouvement d'ouverture de la capote.

4. Capote pour véhicule cabriolet selon l'une des revendications 1 à 3, **caractérisée en ce que** le bras d'aileron (14) est disposé sensiblement parallèlement à l'étrier tendeur de tissu de capote (4) lorsque la capote est ouverte.

5. Capote pour véhicule cabriolet selon l'une des revendications 1 à 4, **caractérisée en ce qu'**il est prévu un tendeur (15) et une pièce (16) homologue au tendeur qui, lorsque la capote est fermée, se trouvent dans une position de point mort supérieure l'un par rapport à l'autre et soutiennent l'étrier tendeur de tissu de capote (4).

6. Capote pour véhicule cabriolet selon l'une des revendications 1 à 5, **caractérisée en ce qu'**il est prévu un bras d'arceau (12), le bras d'arceau (12), le bras d'aileron (14) et l'étrier tendeur de tissu de capote (4) formant un triangle lorsque la capote est fermée.

7. Capote pour véhicule cabriolet selon la revendication 6, **caractérisée en ce que** le bras d'arceau (12) est disposé sensiblement parallèlement au bras d'aileron (14) lorsque la capote est ouverte.

8. Capote pour véhicule cabriolet selon la revendication 6 ou 7, **caractérisée en ce qu'**un segment supérieur (3c) d'un cadre de lunette arrière (3) est relié rigidement au bras d'arceau (12), une région de fermeture arrière (10a) de la garniture de capote (10) étant fixée au segment supérieur (3c).

9. Capote pour véhicule cabriolet selon l'une des revendications 1 à 8, **caractérisée en ce qu'**il est prévu un élément latéral (3b), l'élément latéral (3b) formant une région de cadre latérale d'une lunette arrière (2), laquelle région est orientée sensiblement perpendiculairement lorsque la capote est fermée.

10. Capote pour véhicule cabriolet selon la revendication 9, **caractérisée en ce qu'**il est prévu un bras intermédiaire (11) relié de façon articulée à l'étrier tendeur de tissu de capote (4) et à l'élément latéral (3b) de sorte que le bras d'aileron (14), l'étrier tendeur de tissu de capote (4), l'élément latéral (3b) et le bras intermédiaire (11) forment ensemble un quadrilatère articulé (16).

11. Capote pour véhicule cabriolet selon l'une des revendications 1 à 10, comportant en outre
une lunette arrière (2) rigide et supportée de façon mobile, la lunette arrière (2) étant mobile entre une position abaissée et une position relevée de la lunette arrière, et
un cadre de lunette arrière (3) relié à l'ensemble de barres de capote (1), une position pliée étant associée au cadre de lunette arrière (3) lorsque la capote est ouverte et une position déployée étant associée au cadre de lunette arrière (3) lorsque la capote est fermée,
le cadre de lunette arrière (3) étant écarté par basculement de la lunette arrière (2) lorsque la capote est ouverte, et
la lunette arrière (2) étant mobile entre la position abaissée et la position relevée de lunette arrière lorsque la capote est ouverte.

12. Capote selon la revendication 11, **caractérisée en ce que** la lunette arrière (2) s'engage dans un creux (3a) de type gorge du cadre de lunette arrière (3) lorsque la capote est fermée et au moins lorsque la lunette arrière est dans la position relevée.

13. Capote selon la revendication 11 ou 12, **caractérisée en ce que** l'ensemble de barres de capote (1) comporte dans une région d'extrémité arrière deux étriers tendeurs de tissu de capote (4) agencés de chaque côté.

14. Capote selon la revendication 13, **caractérisée en ce que** le cadre de lunette arrière (3) est agencé entre les étriers tendeurs de tissu de capote (4).

15. Capote selon l'une des revendications 11 à 14, **caractérisée en ce que** le cadre de lunette arrière (3) comporte plusieurs segments (3b, 3c) mobiles l'un par rapport à l'autre.

16. Capote selon la revendication 15, **caractérisée en ce que** le cadre de lunette arrière (3) comporte deux segments (3b), agencés latéralement et recevant de façon étanche les bords latéraux de la lunette arrière (2) lorsque la capote est fermée, et un segment (3c) agencé transversalement à la direction de roulement et recevant de façon étanche un bord supérieur de la lunette arrière (2).

17. Capote selon l'une des revendications 11 à 16, **caractérisée en ce que** la lunette arrière (2) est maintenue dans un boîtier (5) relié fixe à la carrosserie du véhicule cabriolet.

18. Capote selon la revendication 17, **caractérisée en ce que** la lunette arrière (2) est mobile par rapport au boîtier (5) au moyen d'un entraînement (6) et d'un rail de guidage (7).

19. Capote selon l'une des revendications 11 à 18, **caractérisée en ce que** l'ensemble de barres de capote (1) est conformé en mécanisme articulé à commande forcée.

20. Capote selon la revendication 19, **caractérisée en ce que** le mécanisme articulé comporte de chaque côté du véhicule un bras principal (1a), une pièce de cadre médiane (1b) et une pièce de cadre avant (1c).

21. Capote selon l'une des revendications 11 à 20, **caractérisée en ce que** l'ensemble de barres de capote (1) comporte deux mécanismes articulés à commande forcée, le cadre de lunette arrière (3) faisant partie du mécanisme articulé.

22. Capote selon l'une des revendications 11 à 21, **caractérisée en ce que** l'ensemble de barres de capote (1) comporte un arceau frontal (1d), l'arceau frontal (1d) étant fixé de façon amovible à un cadre de pare-brise avant lorsque la capote est fermée.

23. Capote selon l'une des revendications 11 à 22, **caractérisée en ce qu'**une région de fermeture arrière (10a) de la garniture de capote (10) est fixée au cadre de lunette arrière (3).

24. Capote selon l'une des revendications 11 à 23, **caractérisée en ce que** l'ensemble de barres de capote (1) comporte une unité de support principale (8).

25. Capote selon l'une des revendications 11 à 24, **caractérisée en ce que** l'ensemble de barres de capote (1) est entraînable au moyen d'un dispositif d'entraînement (9).

26. Capote selon l'une des revendications 1 à 25, **caractérisée en ce qu'**un arceau frontal (1d) est relié via un bras de commande (16a) à l'étrier tendeur de tissu de capote (4) de sorte qu'un basculement vers le haut de l'étrier tendeur de tissu de capote (4) est effectué en même temps qu'un basculement vers le haut de l'arceau frontal (1f).

27. Capote selon l'une des revendications 1 à 26, **caractérisée en ce que** le bras d'aileron (14) soutient la conformation arrière en aileron (19).

28. Capote selon l'une des revendications 1 à 27, **caractérisée en ce que** le bras d'aileron (14) forme un bord supérieur incliné de la conformation arrière en aileron (19).

29. Capote selon l'une des revendications 1 à 28, **caractérisée en ce qu'**une pièce moulée démontable (22a) peut être fixée au bras d'aileron (14) en vue de soutenir la conformation arrière en aileron (19).

30. Capote selon l'une des revendications 1 à 29, **caractérisée en ce qu'**une pièce moulée démontable (22b) peut être fixée à l'étrier tendeur de tissu de capote (4) en vue de soutenir la conformation arrière en aileron (19).

31. Capote selon l'une des revendications 1 à 30, **caractérisée en ce que** le bras d'aileron est fixé de façon articulée aux extrémités opposées, la distance entre les fixations articulées étant constante pendant le mouvement d'ouverture de la capote.
